# EUROPÄISCHE PATENTSCHRIFT

(11) **EP 1 912 895 B1**
(45) Veröffentlichungstag und Bekanntmachung des Hinweises auf die Patenterteilung: **23.03.2016**
(21) Anmeldenummer: 06775848.2
(22) Anmeldetag: 10.08.2006
(51) Int. Cl.: B01J 20/20, C01B 31/08

(54) **VERFAHREN ZUR HERSTELLUNG VON KUGELAKTIVKOHLE**
METHOD FOR PRODUCING SPHERICAL ACTIVATED CARBON
PROCEDE DE PRODUCTION DE CHARBON ACTIF SPHERIQUE

(30) Priorität: 12.08.2005 DE 102005038554
(43) Veröffentlichungstag der Anmeldung: 23.04.2008
(73) Patentinhaber: Blücher GmbH, 40699 Erkrath (DE)
(72) Erfinder: SCHÖNFELD, Manfred, 06862 Rosslau (DE); SCHÖNFELD, Raik, 30269 Hannover (DE)
(74) Vertreter: Von Rohr Patentanwälte Partnerschaft mbB
(86) Internationale Anmeldenummer: PCT/DE2006/001419
(87) Internationale Veröffentlichungsnummer: WO 2007/019830

(56) Entgegenhaltungen:
- WO-A-2004/046033
- DE-A1- 2 606 368
- DE-A1- 19 912 145
- US-A- 3 870 652

## Beschreibung

### Gebiet der Erfindung.

Die Erfindung betrifft ein Verfahren zur Herstellung kugelförmiger Aktivkohle, wobei Polymerkügelchen, welche chemische Gruppen, die thermisch zerfallen, enthalten, karbonisiert werden. Kugelförmige Aktivkohlen im Sinne der Erfindung sind Aktivkohlepartikel mit im wesentlichen ähnlichen Erstreckungen in allen drei Raumdimensionen, insbesondere mit sphärischer Form. Neben der Kugelform kommen aber auch die Würfelform, Quaderform oder Zylinderform in Frage, sofern die Erstreckungen in zwei verschiedenen Raumdimensionen sich nicht um mehr als den Faktor 3, besser weniger als den Faktor 2, unterscheiden.

Hintergrund der Erfindung und Stand der Technik.

Neben Anwendungen, in welchen klassische Aktivkohlen als Massenprodukt eingesetzt werden, gewinnen Anwendungen zunehmend an Bedeutung, die spezielle Hochleistungsaktivkohlen erfordern. Dies sind zu einen Anwendungen; bei welchen die erforderlichen Menge an Aktivkohle für einen bestimmten Zweck und eine bestimmte Einsatzdauer niedrig zu halten sind und dennoch hervorragende Adsorptionsleistungen (Adsorptionskinetik, Kapazität) verlangt werden. Dies sind insbesondere mobile Anwendungen, wie in Filtern in Fahrzeugen (Kfz, Flugzeuge, etc.) oder in Gasmasken, aber auch in Gebäudeluftfiltern. Neben einem günstigen Leistungsgewicht spielen dabei auch andere Anforderungen eine Rolle, wie beispielsweise geringer Druckabfall über einen die Aktivkohle enthaltenden Filter. Dies bedeutet aber auch, daß es aus insofern zusätzlichen Anforderungen nicht immer möglich ist, hinsichtlich der BET Oberfläche maximierte Aktivkohlen einzusetzen; es kann vielmehr notwendig sein, Aktivkohlen einzusetzen, die trotz moderater BET Oberfläche dennoch überragende Absorptionseigenschaften aufweisen. In jedem Fall sind ausgezeichnete Adsorptionsleistungen verlangt, insbesondere im Falle von Filtern, die vor Giftgasen Personenschutz bieten sollen. Zudem soll eine kugelförmige Aktivkohle besonders abriebfest sein.

Aus der Literaturstelle EP 0 326 271 ist ein Verfahren zur Herstellung einer Aktivkohlen bekannt, die durch, Karbonisierung eines polysulfonierten Copolymers herstellbar ist. Die erhaltene Aktivkohle besitzt eine multimodale Porengrößenverteilung, i.e. einen hohen Anteil an Meso- und Makroporen.

Aus der Literaturstelle WO 96/21616 ist ein Verfahren zur Herstellung einer Aktivkohle aus monosulfonierten Copolymeren bekannt.

Aus der Literaturstelle WO 99/28234 ist ein Verfahren zur Herstellung einer Aktivkohle aus einem Styrol-Divinylbenzol-Copolymeren bekannt, wobei durch Variation verfahrensmäßiger Parameter die Porengrößenverteilung in weiten Bereichen eingestellt werden kann.

Aus der Literaturstelle US 4,957,897 ist ein Verfahren zur Herstellung von Aktivkohle aus einem polysulfonierten vinylaromatischen Polymer bekannt, wobei die Karbonisierung unter Abspaltung von Sulfonsäuregruppen erfolgt.

Aus der Literaturstelle WO 2004/046033 ist eine Kugelaktivkohle bekannt, die eine verbesserte Porengrößenverteilung und eine relativ hohe fraktale Dimension aufweist.

Das in den vorstehenden Verfahren oft eingesetzte Edukt ist ein frischer oder verbrauchter Ionaustauscher in Kugelform. Hierbei handelt es sich um (Co)Polymere, welche chemisch aktive Gruppen, beispielsweise Sulfongruppen tragen, und eine poröse Struktur bzw. Gelstruktur aufweisen. Solche Ionenaustauscher sind dem Fachmann aus der Praxis bekannt.

Weiter betrifft die US 3,870,652 A gleichermaßen ein Verfahren zur Herstellung eines kohlenstoffhaltigen Materials, wobei als Ausgangsmaterialien Holz, Bitumenkohle, Semianthracitkohle etc., zum Einsatz kommen.

Allen vorstehend beschriebenen bekannten Verfahren zur Herstellung von Aktivkohlen ist der Nachteil gemeinsam, daß die Absorptionseigenschaften noch nicht höchsten Anforderungen genügen. Dies hängt mit den folgenden Sachverhalten zusammen.

Aufgrund der Komplexität einer rauhen, insbesondere mikrorauhen, Oberfläche sind Angaben über die Fläche der Oberfläche problematisch. Denn die Fläche hängt von der verwendeten Auflösung bei der Flächenermittelung ab. Die topologische Dimension einer Fläche beträgt stets 2 (topologische Dimensionen sind stets ganzzahlig). Dagegen kann die Hausdorff-Besicovitsch-Dimension oder fraktale Dimension aufgrund der Szpilrajn-Ungleichung einen Wert > 2 annehmen, sofern die Fläche eine Struktur, insbesondere eine Mikrostruktur aufweist. Die fraktale Dimension ist im Falle einer Fläche jedoch stets kleiner 3, da die Raumdimensionen gequantelt sind, und folglich nicht beliebig kleine selbstähnliche Strukturen existieren können. In der Praxis der Gasadsorption ist die Obergrenze durch Dimensionen adsorbierender Probenmolekule gegeben. Je näher die fraktale Dimension an 3 herankommt, um so feiner strukturiert und folglich um so "mikrorauher" ist die Oberfläche. Im Falle von Kohlenstoffoberflächen führt eine solche Mikrorauhigkeit dazu, daß vermehrt bindungsfähige oder zumindest attraktiv wirkende Unregelmäßigkeiten der elektronischen Zustanddichtefunktionen an der (inneren) Oberfläche auftreten mit der Folge einer verbesserten Bindung von zu adsorbierenden Molskülspezies. Die Verbesserung der Bindung umfaßt einerseits eine Erhöhung der Packungsdichte innerhalb einer adsorbierten Monolage und andererseits eine erhöhte Bindungsfestigkeit. Hieraus ergibt sich, dass die Einstellung einer möglichst hohen fraktalen. Dimension in Verbindung mit einer hohen Mikroporosität zu verbesserten Adsorptionsleistungen führt. Dies ist auch nicht widersprüchlich, weil geringe Meso- und Makroporosität die fraktale Dimension zwar theoretisch reduziert, jedoch der Beitrag der Meso- und Makroporosität insgesamt zur fraktalen Dimension recht gering ist.

Im Ergebnis ist insbesondere die fraktale Dimension bei Aktivkohlen des Standes der Technik noch verbesserungsfähig.

Technisches Problem der Erfindung.

Der Erfindung liegt das technische Problem zu Grunde, ein Verfahren zur Herstellung einer Aktivkohle anzugeben, deren Absorptionseigenschaften, insbesondere die fraktale Dimension, verbessert sind.

Zur Lösung des zuvor geschilderten technischen Problems schlägt die vorliegende Erfindung nach Patentanspruch 1 vor; weitere, bevorzugte Ausführungsformen sind Gegenstand der Verfahrensunteransprüche.

Grundzüge der Erfindung und bevorzugte Ausführungsformen.

Zur Lösung dieses technischen Problems lehrt die Erfindung, dass die aus den Partikeln erhaltene Aktivkohle nach der Karbonisierung schockgekühlt wird, wobei der Betrag des Temperaturgradienten mehr als 100 K/min. beträgt.

Die Erfindung beruht auf der Erkenntnis, dass bei dem an eine Karbonisierung oder eine Aktivierung anschließenden Abkühlprozess die fraktale Dimension abnimmt. Durch die Schockkühlung wird die in der Karbonisierung bzw. Aktivierung erhaltene hohe fraktale Dimension gleichsam eingefroren. Anlagerungs- bzw. Umlagerungsprozesse in den Poren, die bei dem normalen Abkühlen aus thermodynamischen Gründen stattfinden, werden durch die sehr schnelle Schockkühlung kinetisch gehemmt. Insbesondere in Mikro- und Mesoporen bleibt somit eine vergleichsweise hohe Oberflächenrauhigkeit erhalten, wodurch die Adsorptionseigenschaften insgesamt verbessert werden. Zum einen kann die BET Oberfläche erhöht sein. Insbesondere wird aber auch die Adsorptionsbindung zu adsorbierender Moleküle stärker mit der Folge einer festeren Bindung und letztendlich auch einer höheren Beladbarkeit der Aktivkohle.

Die Schockkühlung wird unmittelbar anschließend an den Endkarbonisierungsschritt oder, sofern ein Aktivierungsverfahrensschritt durchgeführt wird, unmittelbar anschließend an den Aktivierungsverfahrensschritt durchgeführt. Dabei ist die Temperatur der Partikel unmittelbar vor der Schockkühlung in der Regel die Temperatur der Partikel zum Abschluss der Karbonisierung bzw. der Aktivierung. Die Temperatur der Aktivkohle unmittelbar vor der Schockkühlung liegt im Einzelnen typischerweise im Bereich von 900 K bis 1300 K, vorzugsweise im Bereich von 1100 K bis 1250 K. Die Temperatur der Aktivkohle unmittelbar nach der Schockkühlung liegt typischerweise im Bereich von 293 K bis 600 K, vorzugsweise im Bereich von 373 K bis 473 K. Der Betrag des Temperaturgradienten der Schockkühlung liegt vorzugsweise im Bereich von 200 K/min. bis 5000 K/min., insbesondere im Bereich von 400 K/min. bis 1000 K/min..

Die Schockkühlung kann im Einzelnen dadurch durchgeführt werden, dass unmittelbar beim Austrag der Aktivkohle aus dem Pyrolisierungsofen bzw. Aktivierungsofen frisch verdampftes Stickstoffgas im Gegenstrom über die Aktivkohle geleitet wird. Der Stickstoffgasstrom hat dabei vor Auftreffen auf die Aktivkohle eine Temperatur von typischerweise im Bereich 77 K bis 150 K, vorzugsweise von 77 K bis 120 K, meist ca. 100 K. Selbstverständlich können auch andere Inertgase eingesetzt werden, wobei diese dann auf geeignete Weise auf die genannte Temperatur gebracht werden müssen.

Vorzugsweise wird die Karbonisierung in einem Vorkarbonisierungsschritt und einem anschließenden Endkarbonisierungsschritt durchgeführt, wobei ein Lieferant von freien Radikalen im Endkarbonisierungsschritt in die Karbonisierungsatmophäre eingebracht werden kann.

Als Lieferanten von freien Radikalen kommen insbesondere solche in Frage, die bei der (thermischen) Zersetzung bzw. beim Zerfall Sauerstoffradikale bilden. Beispiele sind organische Hydroperoxid-, Persäuren-, Persäurester-, Diaacylperoxid-, Ketonperoxid-, Epidioxid- und Peroxidverbindungen, H₂O₅, Permanganat, ortho-Phosphorsäure, oder P₂O₅. Vorzugsweise wird H₂O₂ eingesetzt. Ein wasserlöslicher Lieferant von freien Radikalen wird vorzugsweise in wäßriger Lösung in die Karbonisierungsatmosphäre eingespritzt. Nicht wasserlösliche flüssige organische Lieferanten können direkt eingespritzt werden.

Bei Einsatz von H₂O₂ ist der Einsatz einer wäßrigen Lösung einer Konzentration von 5 bis 50 Gew.-%, vorzugsweise 5 bis 30 Gew.-%, H₂O₂ bevorzugt. Des Weiteren ist eine Menge an H₂O₂ Lösung von 50 bis 500 g, vorzugsweise 150 bis 300 g, bezogen auf 1 kg eingesetzten Polymerkügelchen, bevorzugt. Bei Einsatz von ortho-Phosphorsäure ist eine Konzentration von der wäßrigen Lösung von 1 bis 20 Gew.-%, insbesondere 1 bis 10 Gew.-% bevorzugt. Je kg eingesetzter Polymerkügelchen können dann 50 bis 500 g, vorzugsweise 100 bis 250 g, der Lösung eingedüst werden.

Im Rahmen des erfindungsgemäßen Verfahrens können die eingesetzten Polymerkügelchen beispielsweise aus einem Polystyrol(co)polymer, Polyacryl(co)polymer, Polyalkylamin(co)polymer oder Phenol-Formaldehydharz, vorzugsweise aus einem sulfonierten Copolymer von Styrol mit Divinylbenzol oder mit Acrylsäure, hergestellt, insbesondere ein Ionenaustauscher des Geltyps oder ein makroporöser Ionenaustauscher sein. Es kann sich auch um verbrauchte Ionenaustauscher handeln, unverbrauchte Ionenaustauscher sind jedoch bevorzugt. Ionenaustauscher des Geltyps enthalten typischerwiese ca. 2 bis 10%, insbesondere 4 bis 9%, Divinylbenzol Monomere (Gewichtsanteile Monomer zur Gesamtmenge Monomere). Die thermisch zerfallenden chemischen Gruppen der eingesetzten Polymerkügelchen sind dann typischerweise Sulfonsäuregruppen, sogenannte Homologe, wie Kohlenwasserstoffradikale und -verbindungen, und aromatische Kohlenwasserstoffradikale und -verbindungen. Handelsübliche Ionaustauscherkügelchen haben typischerweise einen Durchmesser von 0,2 bis 2 mm, insbesondere von 0,4 bis 1 mm, und führen zu kugelförmigen Aktivkohlen mit einem Durchmesser im Bereich von 0,1 bis 1,8 mm Durchmesser, insbesondere 0,3 bis 0,8 mm Durchmesser.

Die Polymerkügelchen können vor der Karbonisierung mit SO₃ Gas behandelt werden, vorzugsweise bei Temperaturen zwischen 273 K und 573 K, insbesondere zwischen 293 K und 443 K, und im Druckwechsel zwischen -1 bar und 10 bar, insbesondere zwischen -1 bar und 5 bar, bezogen auf den Atmosphärendruck. Hierdurch wird eine vollständige Resttrocknung des Polymers vor der weiteren Anlagerung von Sulfongruppen erreicht. Weiterhin werden die vorhandenen Sulfongruppen dehydriert. Schließlich erfolgt eine weitere Anlagerung von Sulfongruppen bis zu einer teilweisen Polysulfonierung.

Anschließend an die Behandlung mit S0₃ Gas und vor der Karbonisierung können die Polymerkügelchen mit konzentrierter Schwefelsäure oder Oleum behandelt werden, vorzugsweise in einem Massenverhältnis von 1 Gewichtsteil Säure auf 0,5 bis 10 Gewichtsteile, insbesondere auf 1 bis 3 Gewichtsteile, Polymerkügelchen und im Temperaturbereich von 273 K bis 573 K, insbesondere von 400 K bis 550 K. Die konzentrierte Schwefelsäure kann eine Konzentration (Mol SO₃ / Mol H₂O) von 60% bis 100%, insbesondere 80% bis 98%, aufweisen. Im Falle des Oleums kann der Anteil an freiem SO₃ (bezogen auf Mole 100%iger Schwefelsäure) im Bereich von 1 % bis 35, insbesondere 1 % bis 25%, liegen. In dieser Verfahrensstufe wird eine Peptisation erreicht, i.e. Monomer-, Dimer- und Oligomerreste werden herausgelöst und anschließend auf der Oberfläche der Partikel angelagert. Diese Anlagerungen bilden im Zuge der anschließenden Karbonisierung eine sehr harte und folglich abriebfeste Pseodographitschicht auf der Oberfläche der Partikel.

Der Vorkarbonisierungsschritt kann in einem Temperaturbereich von zumindest 373 K als Anfangstemperatur bis maximal 673 K als Endtemperatur, innerhalb des Temperaturbereiches mit einem Aufheizgradienten von 0,5 K/min bis 5 K/min, insbesondere 1 K/min bis 3 K/min, und in einer inerten oder oxidierenden Atmosphäre durchgeführt werden. Die Anfangstemperatur kann im Bereich von 373K bis 523K, insbesondere 453K bis 523 K, liegen. Die Endtemperatur kann im Bereich von 533 K bis 673 K-liegen. Das Temperaturprogramm dieses Verfahrensschrittes ist gegeben durch die Anfangstemperatur, den hieran anschließenden Aufheizprozess mit dem angegebenen Aufheizgradienten und die erreichte Endtemperatur. Als Inertgase kommen beispielsweise Stickstoff oder Argon in Frage. Eine oxidierende Atmosphäre kann beispielsweise durch Zusatz von Sauerstoff oder Luft zum Inertgas erzeugt werden. Dabei kann der Anteil Sauerstoff bzw. Luft (bezogen auf das Volumen) im Inertgas 1% bis 10%, insbesondere bis 5%, betragen, wobei die Angabe Sauerstoff aus Peroxidzerfall nicht umfasst.

Der Endkarbonisierungsschritt kann in einem Temperaturbereich von zumindest der Endtemperatur der Vorkarbonisierung bis maximal 1073K bis 1273 K und innerhalb des Temperaturbereiches mit einem Aufheizgradienten von 2 K/min bis 40 K/min, insbesondere 10 K/min bis 25 K/min, durchgeführt werden.

Anschließend an die Endkarbonisierung kann ein Aktivierungsverfahrensschritt durchgeführt werden. Dieser kann entsprechend dem Stand der Technik ausgeführt sein, wobei die Parameter im Einzelnen nach Maßgabe der gewünschten Porenstruktur zu wählen sind. Typischerweise erfolgt die Aktivierung bei Temperaturen von 900 K bis 1200 K unter Zugabe von 1 bis 30% (bezogen auf den Anteil Mole) Wasserdampf und/oder CO₂ zum Inertgas bzw. Spülgas. Im Falle des CO₂ ist eine Obergrenze von 10% bevorzugt.

Eine erfindungsgemäß erhältlich Kugelaktivkohle ist beispielsweise in Mitteln zur Filterung von Gasen, insbesondere Luftfiltern und Gasmasken bzw. Gasschutzanzügen, einsetzbar. Weitere Einsatzgebiete sind: Gastrennung, Gasspeicherung, Latentwärmetauscher, Filtereinrichtungen in Klimaanlagen, insbesondere auch im Ansaugbereich zur Adsorption ungewollt im Ansaugbereich freigesetzter toxischer Gase, Träger für pharmazeutische Wirkstoffe, und Katalyse, beispielsweise mittels mit einer katalytisch aktiven Substanz beschichteter Aktivkohlen. Im Rahmen dieser Verwendungen sind die Aktivkohlepartikel auf ein Trägermaterial aufgebracht und fixiert und/oder darin eingebettet. Das Trägermaterial wird dann einem zu reinigenden Gasstrom ausgesetzt. Im Falle der Träger für pharmazeutischen Wirkstoffe werden die Aktivkohlepartikel mit dem Wirkstoff beladen und dann galenisch in üblicher Weise hergerichtet.

Im Folgenden wird die Erfindung anhand von lediglich Ausführungsformen darstellenden Beispielen näher erläutert.

### Beispiel 1: Herstellung einer Kugelaktivkohle unter Einsatz von H₂O₂.

Eingesetzt wird ein stark saurer, gelförmiger Kationenaustauscher aus sulfoniertem Styrol-Divinylbenzol Copolymersat in der H-Form, wobei die Matrix mit ca. 10% Divinylbenzol-Anteil vernetzt ist, in Kugelform und einer Partikelgröße (Durchmesser) von 1 mm. Dieses handelsübliche Produkt (C100x10H, Purolite) wird zunächst dreimal mit entionisiertem Wasser gewaschen (30 min., 40 °C). Nach dem Waschen erfolgt eine Zentrifugation unter Vakuum (8000 g, 10 min., 10 mBar) auf eine Restfeuchte von weniger als 5 Gew.-%, vorzugsweise weniger als 2,5 Gew.-%, Wasser.

Hieran schließt sich eine Behandlung des Polymers in einem diskontinuierlichen Reaktor mit SO₂-Gas an. Es erfolgen 25 Druckwechsel zwischen -1 bar und 5 bar. Dabei erhitzen sich die Polymerkügelchen auf eine Temperatur im Bereich von 293 K bis 443 K aufgrund der exothermen Reaktion des Restwassers mit SO₃.

Sodann erfolgt in einem diskontinuierlichen Reaktor eine Behandlung der Polymerkügelchen mit Oleum (3% freies SO₃) in einem Massenverhältnis von 1 : 1,75 (Säure zu Polymer-Kügelchen). Dabei wird eine Temperatur der Polymerkügelchen von ca. 493 K eingestellt. In dieser Verfahrensstufe erfolgt keine zusätzlich Sulfonierung des Polymers. Es handelt sich um eine reine Leaching Verfahrensstufe, in welcher Kohlenwasserstoff Monomere, Dimere und Oligomere mobilisiert und auf den Oberflächen der Kügelchen abgelagert werden.

Dann erfolgt die Vorkarbonisierung in dem gleichen Reaktor und, in einer Argonatmosphäre, welcher 3 Vol.-% Sauerstoff (technische Reinheit) zugesetzt ist. Beginnend bei 493 K wird mit einem Aufheizgradienten von 2 K/min auf eine Temperatur von 573 K hochgefahren. Hierbei wird nahezu aller Schwefel aus den Kügelchen abgespalten und ausgetrieben.

Es schließt sich im gleichen Reaktor dann die Endkarbonisierung an. Hierbei wird praktisch kein Schwefel mehr freigesetzt, so dass auf eine Schwefel-Abgasreinigung in dieser Verfahrensstufe verzichtet werden kann. Beginnend bei 573 K wird mit einem Aufheizgradienten von 12 K/min bis auf eine Temperatur von 1193 K hochgefahren. Dabei werden alle ca. 3 min. eine wäßrige 10 %-ige H₂O₂ Lösung in den Gasraum direkt aus einer gekühlten Zuführleitung eingedüst. Insgesamt werden je kg Polymerkügelchen 200 g Lösung eingedüst, wobei sich die Gesamtmenge nahezu gleichförmig über den Aufheizzeitraum erstreckt.

Hieran schließt sich optional eine Aktivierung bei 1193 K in einer Inertgasatmosphäre an. Dabei werden die pyrolysierten Kugeln in einer Aktivierungsgasatmosphäre (Ar 65 Vol.-%, CO₂ 7 Vol.-%, H₂O 28 Vol.-%) für 240 min. auf besagter Temperatur gehalten.

Nach der Endkarbonisierung bzw. nach der Aktivierung erfolgt eine Schockkühlung dadurch, dass frisch verdampfter Stickstoff einer Temperatur von ca. 100 K beim Austrag der Aktivkohle aus dem Reaktor im Gegenstrom über die Aktivkohle geleitet wird. Die Anfangstemperatur bei der Schockführung entspricht der Endtemperatur der Endkarbonisierung bzw. der Aktivierung. Der Temperaturgradient beträgt ca. 520 K/min. Die Endtemperatur der Schockkühlung beträgt ca. 423 K.

Die erhaltenen Kugelaktivkohlepartikel weisen einen Durchmesser von ca. 0,55 mm auf. Man erhält eine Kugelaktivkohle mit hohem Mikroporenanteil und vergleichsweise sehr geringem Meso- und Makroporenanteil sowie mit einer sehr hohen fraktalen Dimension.

Als BET-Oberfläche ergibt sich ein Wert von ca. 1400 m²/g. Für die Porengrößenverteilung ergeben sich die folgenden Werte: 1,2 - 1,7 nm: ca. 35%, 1,7 - 2,1: ca. 38%, 2,1-2,5: ca. 13%, 2,5 - 2,9: ca. 4%, 2,9 - 3,3: ca. 3% (Rest außerhalb der genannten Durchmesserbereiche). Die Poren < 4 nm bilden ca. 97 % des gesamten (offenen) Porenvolumens. Als Wert für die fraktale Dimension wurde D = 2,956 erhalten. Bezüglich der verwendeten Meßmethoden für die vorstehend genannten Werte wird ausdrücklich auf die Literaturstelle WO 2004/046033 A1 Bezug genommen.

Die Abriebfestigkeit, gemessen nach der Ballpan Methode (siehe ASTM D3802), ergibt sich zu 100%.

Die Einzelkornbelastung bzw. der Berstdruck beträgt im Mittel ca. 2000 g/Korn und erreicht in den Spitzenwerten bis zu 3000 g/Korn. Die Messung des Berstdruckes wurde wie folgt durchgeführt. Ein Probenkorn wurde auf eine Platte einer Messvorrichtung gelegt, welche die waagerecht angeordnete Platte und einen vertikal verschieblich gelagerten Druckstempel umfasst. Der Druckstempel wurde vorsichtig auf das Probenkorn angelassen und in einen auf seinem oberen Ende angeordneten Wasserbehälter wurde langsam und vorsichtig solange Wasser eingefüllt, bis das Korn zerborsten ist. Dann wurden der Druckstempel mit gefülltem Wasserbehälter gewogen; dies war dann der erhaltene Wert. Es wurden stets zumindest 20 Probenkörner gemessen und aus den erhaltenen Werten der arithmetische Mittelwert errechnet.

## Patentansprüche

1. Verfahren zur Herstellung von Aktivkohle, insbesondere von kugelförmiger Aktivkohle, wobei Partikel aus einer organischen Vorläufersubstanz karbonisiert werden,
**dadurch gekennzeichnet,**
**dass** die aus den Partikeln erhaltene Aktivkohle nach der Karbonisierung schockgekühlt wird, wobei der Betrag des Temperaturgradienten mehr als 100 K/min. beträgt.

2. Verfahren nach Anspruch 1, **dadurch gekennzeichnet, dass** die Partikel Polymerkügelehen aus einem Polystyrol(co)polymer, Polyacryl(co)polymer, Polyalkylamin(co)polymer oder Phenol-Formaldehydharz, vorzugsweise aus einem sulfonierten Copolymer von Styrol mit Divinylbenzol oder mit Acrylsäure, hergestellt sind, insbesondere Ionenaustauscher des Geltyps sind, wobei optional das Polymer thermisch zerfallende chemische Gruppen trägt.

3. Verfahren nach Anspruch 1 oder 2, **dadurch gekennzeichnet, dass** die thermisch zerfallenden chemischen Gruppen der eingesetzten Polymerkügelchen Sulfonsäuregruppen sind.

4. Verfahren nach einem der Ansprüche 1 bis 3, **dadurch gekennzeichnet, dass** die Partikel vor der Karbonisierung mit SO₃ Gas behandelt werden, vorzugsweise bei Temperaturen zwischen 273 K und 573 K und im Druckwechsel zwischen -1 bar und 10 bar, bezogen auf den Atmosphärendruck.

5. Verfahren nach einem der Ansprüche 1 bis 4, **dadurch gekennzeichnet, dass** die Partikel vor der Karbonisierung mit konzentrierter Schwefelsäure oder Oleum behandelt werden, vorzugsweise in einem Massenverhältnis von 1 Gewichtsteil Säure auf 0,5 bis 10 Gewichtsteile Polymerkügelchen und im Temperaturbereich von 273 K bis 573 K.

6. Verfahren nach einem der Ansprüche 1 bis 5, **dadurch gekennzeichnet, dass** die Karbonisierung in einem Vorkarbonisierungsschritt und einem anschließenden Endkarbonisierungsschritt durchgeführt wird, wobei optional ein Lieferant von freien Radikalen im Endkarbonisierungsschritt in die Karbonisierungsatmophäre eingebracht wird.

7. Verfahren nach einem der Ansprüche 1 bis 6, **dadurch gekennzeichnet, dass** der Lieferant von freien Radikalen ausgewählt ist aus der Gruppe bestehend aus "organische Hydroperoxid-, Persäuren-, Persäureester-, Ketonperoxid-, Diacylperoxid-, Epidioxid- und Peroxidverbindungen, H₂O₂, Permanganat, ortho-Phosphorsäure, und P₂O₅", vorzugsweise H₂O₂ ist.

8. Verfahren nach Anspruch 7, **dadurch gekennzeichnet, dass** ein wasserlöslicher Lieferant von freien Radikalen in wäßriger Lösung in die Karbonisierungsatmosphäre eingespritzt wird.

9. Verfahren nach einem der Ansprüche 6 bis 8, **dadurch gekennzeichnet, dass** der Vorkarbonisierungsschritt in einem Temperaturbereich von zumindest 373 K als Anfangstemperatur bis maximal 673 K als Endtemperatur, innerhalb des Temperaturbereiches mit einem Aufhaizgradienter von 0,5 K/min bis 5 K/min und in einer inerten oder oxidierenden Atmosphäre durchgeführt wird.

10. Verfahren nach einem der Ansprüche 6 bis 9, **dadurch gekennzeichnet, dass** der Endkarbonisierungsschritt in einem Temperaturbereich von zumindest der Endtemperatur der Vorkarbonisierung bis maximal 1273 K und innerhalb des Temperaturbereiches mit einem Aufheizgradienten von 2 K/min bis 20 K/min durchgeführt wird.

11. Verfahren nach einem der Ansprüche 1 bis 10, **dadurch gekennzeichnet, dass** anschließend an die Endkarbonisierung ein Aktivierungsverfahrensschritt durchgeführt wird.

12. Verfahren nach einem der Ansprüche 1 bis 11, **dadurch gekennzeichnet**, das die Schockkühlung unmittelbar anschließend an den Endkarbonisierungsschritt oder unmittelbar anschließend an den Aktivierungsverfahrensschritt durchgeführt wird.

13. Verfahren nach einem der Ansprüche 1 bis 12, **dadurch gekennzeichnet, dass** die Temperatur der Aktivkohle unmittelbar vor der Schockkühlung im Bereich von 900 K bis 1300 K, vorzugsweise im Bereich von 1100 K bis 1250 K, liegt.

14. Verfahren nach einem der Ansprüche 1 bis 13, **dadurch gekennzeichnet, dass** die Temperatur der Aktivkohle unmittelbar nach der Schockkühlung im Bereich von 293 K bis 600 K, vorzugsweise im Bereich von 373 K bis 473 K, liegt.

15. Verfahren nach einem der Ansprüche 1 bis 14, **dadurch gekennzeichnet, dass** der Betrag des Temperaturgradienten der Schockkühlung im Bereich von 200 K/min. bis 5000 K/min., vorzugsweise im Bereich von 400 K/min. bis 1000 K/min., liegt.

## Claims

1. Method for producing activated carbon, in particular spherical activated charcoal, wherein particles of an organic precursor are carbonized,
**characterized in that**,
the activated carbon obtained from the particles is quenched after carbonization, wherein the amount of the temperature gradient is more than 100 K/min.

2. Method according to claim 1, **characterized in that** the polymer bead particles are produced from a polystyrene(co)polymer, polyacrylic(co)polymer, polyalkylene(co)polymer or phenol formaldehyde resin, preferably a sulfonated copolymer of styrene with divinylbenzene or with acrylic acid, in particular an ion exchanger of the gel type, wherein, optionally, the polymer carries thermally decomposing chemical groups.

3. Method according to claim 1 or 2, **characterized in that** the thermally decomposing chemical groups of the polymer beads used are sulfonic acid groups.

4. Method according to any one of the claims 1 to 3, **characterized in that** the particles are treated prior to carbonization with SO₃ gas, preferably at temperatures between 273 K and 573 K and in the pressure change between -1 bar and 10 bar relative to the atmospheric pressure ,

5. Method according to any one of the claims 1 to 4, **characterized in that** the particles are treated prior to carbonization with concentrated sulfuric acid or oleum, preferably in a mass ratio of 1 part by weight of acid to 0.5 to 10 parts by weight of polymer beads and in the temperature range of 273 K to 573 K.

6. Method according to any one of the claims 1 to 5, **characterized in that** the carbonization is carried out in a pre-carbonization step and a subsequent final carbonization step, wherein optionally a supplier of free radicals is introduced in the carbonization atmosphere in the final carbonization step.

7. Method according to one of the claims 1 to 6, **characterized in that** the supplier of free radicals is selected from the group consisting of "organic hydroperoxide, peracid, peracid ester, ketone peroxide, diacylperoxide, epidioxide and peroxide compounds, H₂O₂, permanganate, ortho-phosphoric acid, and P₂O₅", preferably H₂O₂.

8. Method according to claim 7, **characterized in that** a water soluble supplier of free radicals is injected into an aqueous solution in the carbonization atmosphere.

9. Method according to any one of the claims 6 to 8, **characterized in that** the pre-carbonization step is carried out in a temperature range of an initial temperature of at least 373 K up to a maximum of 673 K as the final temperature, within the temperature range with a heating gradient of 0.5 K/min to 5 K/min and in an inert or oxidizing atmosphere.

10. Method according to any one of the claims 6 to 9, **characterized in that** the final carbonization step is carried out in a temperature range of at least the final temperature of the pre-carbonization step up to a maximum of 1273 K and within the temperature range with a heating gradient of 2 K/min to 20 K/min.

11. Method according to any one of the claims 1 to 10, **characterized in that** an activation method step is carried out subsequent to the final carbonization.

12. Method according to any one of the claims 1 to 11, **characterized in that** the shock cooling is then carried out immediately subsequent to the final carbonization step or immediately subsequent to the activation method step.

13. Method according to any one of the claims 1 to 12, **characterized in that** the temperature of the active carbon immediately before the shock-cooling is in the range of 900 K to 1300 K, preferably in the range of 1100 K to 1250 K.

14. Method according to any one of the claims 1 to 13, **characterized in that** the temperature of the activated carbon, immediately after the shock-cooling is in the range of 293 K to 600 K, preferably in the range of 373 K to 473 K.

15. Method according to any one of the claims 1 to 14, **characterized in that** the amount of temperature gradient in the shock cooling is in the range of 200 K/min. to 5000 K/min., preferably in the range of 400 K/min. to 1000 K/min.

## Revendications

1. Procédé de fabrication de charbon actif, en particulier de charbon actif sphérique, dans lequel des particules d'une substance précurseur organique sont carbonisées, **caractérisé en ce que** le charbon actif obtenu à partir des particules est, après la carbonisation, soumis à un refroidissement ultra-rapide, la valeur du gradient de température étant supérieure à 100 K/min.

2. Procédé selon la revendication 1, **caractérisé en ce que** les particules perles polymères sont fabriquées à partir d'un (co)polymère de polystyrène, d'un (co)polymère polyacrylique, d'un (co)polymère de polyalkylamine ou d'une résine de phénolformaldéhyde, de préférence à partir d'un copolymère sulfoné de styrène avec du divinylbenzène ou avec de l'acide acrylique, en particulier sont des échangeurs d'ions du type gel, le polymère portant en option des groupes chimiques pouvant subir une décomposition thermique.

3. Procédé selon la revendication 1 ou 2, **caractérisé en ce que** les groupes chimiques pouvant subir une décomposition thermique des perles polymères utilisées sont des groupes sulfoniques.

4. Procédé selon l'une des revendications 1 à 3, **caractérisé en ce que** les particules sont, avant la carbonisation, traitées avec du SO₃ gazeux, de préférence à des températures comprises entre 273 K et 573 K, en présence d'une alternance de pression entre -1 bar et 10 bar par rapport à la pression atmosphérique.

5. Procédé selon l'une des revendications 1 à 4, **caractérisé en ce que** les particules sont, avant la carbonisation, traitées avec de l'acide sulfurique concentré ou avec de l'oléum, de préférence selon un rapport en masse de 1 partie en poids d'acide pour 0,5 à 10 parties en poids de perles polymères et dans la plage de températures de 273 K à 573 K.

6. Procédé selon l'une des revendications 1 à 5, **caractérisé en ce que** la carbonisation est mise en oeuvre dans une étape de précarbonisation, suivie d'une étape de carbonisation finale, en option un générateur de radicaux libres étant, dans l'étape de carbonisation finale, introduit dans l'atmosphère de carbonisation.

7. Procédé selon l'une des revendications 1 à 6, **caractérisé en ce que** le générateur de radicaux libres est choisi dans le groupe consistant en "les composés hydroperoxydes, peracides, esters de peracides, peroxydes de cétone, peroxydes de diacyle, épidioxydes et peroxydes organiques, H₂O₂, un permanganate, l'acide orthophosphorique et P₂O₅", et de préférence est H₂O₂.

8. Procédé selon la revendication 7, **caractérisé en ce qu'**on injecte dans l'atmosphère de carbonisation un générateur de radicaux libres soluble dans l'eau, en solution aqueuse.

9. Procédé selon l'une des revendications 6 à 8, **caractérisé en ce que** l'étape de précarbonisation est mise en oeuvre dans une plage de températures d'au moins 373 K en tant que température de départ à un maximum de 673 K en tant que température finale, dans la plage de températures avec un gradient de montée en température de 0,5 K/min à 5 K/min et dans une atmosphère inerte ou oxydante.

10. Procédé selon l'une des revendications 6 à 9, **caractérisé en ce que** l'étape de carbonisation finale est mise en oeuvre dans une plage de températures d'au moins la température finale de la précarbonisation à un maximum de 1273 K et dans la plage de températures avec un gradient de montée en température de 2 K/min à 20 K/min.

11. Procédé selon l'une des revendications 1 à 10, **caractérisé en ce qu'**on procède à une étape d'activation après la carbonisation finale.

12. Procédé selon l'une des revendications 1 à 11, **caractérisé en ce que** le refroidissement ultra-rapide est mis en oeuvre immédiatement après l'étape de carbonisation finale ou immédiatement après l'étape d'activation.

13. Procédé selon l'une des revendications 1 à 12, **caractérisé en ce que** la température du charbon actif immédiatement avant le refroidissement ultra-rapide est comprise dans la plage de 900 K à 1300 K, de préférence dans la plage de 1100 K à 1250 K.

14. Procédé selon l'une des revendications 1 à 13, **caractérisé en ce que** la température du charbon actif immédiatement après le refroidissement ultra-rapide est comprise dans la plage de 293 K à 600 K, de préférence dans la plage de 373 K à 473 K.

15. Procédé selon l'une des revendications 1 à 14, **caractérisé en ce que** la valeur du gradient de température du refroidissement ultra-rapide est comprise dans la plage de 200 K/min à 5000 K/min, de préférence dans la plage de 400 K/min à 1000 K/min.
